# EUROPEAN PATENT APPLICATION

(11) **EP 1 457 982 A1**
(43) Date of publication of application: **15.09.2004**
(21) Application number: 04250948.9
(22) Date of filing: 23.02.2004
(51) Int. Cl.: G11B 20/00, G06F 1/00, H04N 7/16

(54) **Access system for digital data storage media**

(30) Priority: 27.02.2003 GB 0304472
(71) Applicant: Impressive Ideas Ltd., London W6 0HX (GB)
(72) Inventor: Taylor, Christopher, West Wycombe Buckinghamshire HP12 4BN (GB); Anthony, David, No.3 New York, NY 10013 (US)
(74) Representative: Wood, Graham

(57) **Abstract**

The invention to which this application relates is a system for providing conditional access to a certain portion or portions of data held on a storage media such as a DVD. The system includes the provision of an actuating means which can or can be used to transmit a signal of a predesignated form to processing apparatus in which the storage media can be processed. The portion or portions of data with conditional access can only be accessed and processed when the said predesignated signal is received therefore allowing a level of additional security, prevention of unauthorised access an increased surprise element when the access is achieved and hence increased level of interactivity to be provided.

## Description

The invention to which this application relates is to an access system to allow access to a specified area or portion of digital data held on a storage medium. In particular, although not necessarily exclusively, the invention relates to the provision of digital data on a storage medium and said data, when accessed and processed, can be used to create video and/or audio.

In one example of the invention the digital data is stored on a disc and, yet further, the storage medium is in the form of a digital video disc (DVD). It should be appreciated that the invention as herein described, can be applied to any storage media for digital data such as hard disk and any solid state memory means and the scope of this application extends, and should be interpreted as so doing, to all such storage media.

Conventionally, the storage medium includes a series of data storage areas or groups, hereinafter referred to as areas, identified by identification tags.

Typically the storage medium is inserted into a suitable apparatus for reading the data from the medium and, using that data, video and audio are generated typically via a television set incorporating a display screen and speakers connected to the apparatus.

Normally, upon insertion of the storage medium into the said apparatus, the medium is read by the apparatus and a user selection menu displayed on screen. The menu typically includes a series of user selectable options, and each option on the display screen can relate to a particular area of data on the storage medium identified by the data identification tags. Thus, each title in the menu, is linked to one or a number of data areas of the storage medium. The user can then select the title option from the menu as they wish, typically via a remote control device. The remote control device normally includes a series of keys, including directional keys which, when depressed by the user, cause a cursor or highlight to move around the display screen and hence around the menu options. When the desired option on the menu is located, the user can select that particular option by pressing the appropriate key on the remote control. Upon selection, the portion of data on the storage medium represented by the selected option is identified and the data accessed and video and/or audio reproduced from the said identified portion of data as appropriate.

There are various formats for the transfer of a signal from the remote control device to the storage medium apparatus and this particular invention can be used with any format. The most common format is an infrared system whereby a stream of data generated as a result of the depression of a key or sequence of keys, causes a sequence of data signals to be transmitted via an infrared transmitter and received at the storage apparatus by a receiver and then processed accordingly.

A limitation with known storage medium apparatus is that all of the data that is provided on the storage medium is typically, but not always, displayed on the menu of the initial display generated on screen. Thus, once the menu has been viewed a first time, on subsequent use of the storage medium, there is no element of surprise and the user, can become bored with the data offered by the storage medium relatively quickly, which means that the storage medium is not used, revisited and/or reused as often as perhaps it could be. Furthermore, due to the nature of the storage medium and the portions of the data thereon, storage mediums such as DVD's, which are provided for commercial use in particular, allow uniform access to all of the areas of data on the storage medium.

The aim of the present invention is to provide an improved and new feature to usage of storage medium and the processing apparatus therefor which allows selective and quick access to "hidden"data which is not evident when the storage medium and apparatus is used normally and is not accessible by any evident means and is only accessible by means of the invention. A further aim of the inventive is to allow selective operation and access to portions of data on the storage medium through actuation of a control device, accessory or part of another product, toy or plaything.

In a first aspect of the invention there is provided apparatus for the generation of video and/or audio by the conditional access and processing of selected portions of digital data stored on a storage medium, said data stored in portions on said storage medium and said storage medium placed in processing apparatus for accessing and processing selected portions of digital data to generate video and/or audio and wherein there is provided at least one portion of data on the storage medium which is only conditionally accessible by the processing apparatus in response to a signal of a predesignated form transmitted from a transmitter provided as part of an actuating means and, said processing apparatus, upon receiving the said signal can locate the identified portion of data on the storage medium, access the same and processes the data from said portion to generate the video and/or audio

Thus, the system for the generation of video and/or audio from digital data includes a storage medium for the storage of digital data in identified areas thereon and the data, when accessed and processed via the apparatus, is used to generate video and/or audio via the display screen and/or speakers and at least one of the areas of data is only accessible via the transmission of a signal which is predesignated and specified for that area of data from a location remote to the apparatus and, said apparatus, upon receiving the signal, can then locate the identified area of data on the recording media access the same and process the data to generate video and/or audio which may not be indicated by any other means as being provided on the storage means.

This invention is differentiated from conventional access systems by the fact that in the conventional system, the user is required to interact with the display screen which displays all of the normally available area of data in the form of title options and/or in line options and, in the conventional system, rather than a specified signal being transmitted which is specific to a particular area of data, a signal is sent which either moves a cursor onto a displayed option or is a signal to indicate that the option should be selected, i.e. the signals sent are not actually linked to a particular portion of data. Conventionally, when the signal is sent from the remote control once a particular option title is identified, the apparatus then identifies the particular area of data from the selected option and then accesses the area of data. In contrast, in the current invention, the predesignated stored signal is provided from actuation means which need not be the remote control device and allows immediate selection of the area of data identified directly by the signal, not via a display screen menu. Thus, firstly, the said portion of data need not be shown as being available on any menu display and secondly, to gain access to the area of data there is no requirement for interaction with a menu display.

In one use of the invention the particular area of data which is accessed via the transmission of the signal is linked to the means by which the signal is generated so as, for example, to give direct access to specific information which can be related to the means used for input.

In one embodiment, the actuation means used for the transmission of the predesignated signal, is a remote control device having a specific or number of keys provided thereon for selective depression by a user, and wherein the depression of one or a sequence of said keys by the user, causes the predesignated signal to be generated and transmitted to the apparatus to allow access to at least one portion of data on the storage medium.

In one embodiment, the actuation means incorporates one particular key which is identified as being the key which, when depressed, causes the specified stored signal to be transmitted.

In another embodiment, the specified stored signal is held in a memory connected to an actuation means and the actuation means and memory are, in turn, located in an article such that activation of the actuation means causes the transmission of the predesignated signal. In one embodiment, the actuation means can be provided as part of a product such as, for example, a toy or plaything or an accessory possibly related by theme to the conditionally accessible portion of data on the storage medium.

The predesignated signal can be transmitted by any suitable system such as, for example, RF, Passive resistance, Infra red, bar code or any other suitable data transfer system or mechanical means.

In one embodiment, the actuation means and predesignated signal transmitted by the same can be provided in isolation in that no other signals can be transmitted from the said actuation means. Access to other portions of data in a normal manner can in one embodiment be provided via remote control means provided adjacent to or at a spaced location on the same article in which the actuation means are provided or separately to the article.

In one embodiment, the actuation means can be, for example, a voice activation or may be by an electrical activation or a mechanical activation system.

In any embodiment, once the predesignated signal has been transmitted and received by the apparatus in which the storage medium is located, the conditionally accessible portion or portions of data on said storage medium represented by said signal are accessed and video and/or audio from said data displayed via a display screen and/or speakers. Once displayed, the user may further interact with the storage media as required in a conventional manner or by using the actuation means.

In a further aspect of the invention there is provided apparatus for the generation of video and/or audio by the conditional access and processing of selected portions of digital data stored on a storage medium, said data stored in portions on said storage medium and said storage medium placed in processing apparatus for accessing and processing selected portions of digital data to generate video and/or audio and wherein the storage medium includes a first group of portions of data, said portions accessible in response to signals emitted from a user selection means and a second group including at least one portion of data which is only conditionally accessible, said conditional access achieved when the said processing apparatus receives a predesignated signal from an actuating means.

The present invention therefore provides a system for allowing conditional access to at least one area of data on a storage media such as a disc and for example a DVD. This provides the opportunity to allow normal or "public" access to certain portions of data on the storage medium and conditional access to further areas of data thus providing a security feature Alternatively, all the data on the storage medium is conditionally accessible such that it is only accessible upon receipt of the specific signal thereby providing the opportunity for the data stored on the disc to be accessed in a surprising and/or themed manner which is particularly attractive to children.

It is envisaged that the invention is of particular use in relation to a DVD format of data storage.

Depending on the security requirement of the utilisation of the invention, the specific signal can comprise a selected number of data bits such that for example, a specified signal for a toy, may include only a relatively small number of data bits such as, for example, 2 to 5 as there are no real security concerns and it is only the function of the invention that is required to be performed. However, where there are security concerns and the invention is provided to provide additional security for certain areas of data so as to allow conditional access, the specified signal may incorporate a large number of data bits such as for example up to 20, and/or the specified signal may be changed from time to time so as to prevent attempts to "hack" into the specified signal to gain unauthorised access to the areas of data.

Typically, once the area or areas of data have been accessed via the transmission of the signal, the portions of data are then unlocked and can then additionally respond to normal remote control signals if that is desired.

Typically, if the disc is removed from the apparatus and subsequently reinserted, the conditional access areas of data will not be accessible until the specified signal is again transmitted to the apparatus.

In a further aspect of the invention, the number of times which the conditional areas of data can be accessed can be predetermined and range, for example, from one access only, through to a number of times, or a number of times in a selected time period and the like.

Thus in accordance with the invention, there is provided the ability to allow conditional access to a certain area or areas of data on the DVD. The conditional access can be provided for security purposes such that for example, a DVD includes data areas which are publicly accessible and data areas which can only be accessed by authorised personnel, or can be provided for added entertainment and/or functionality. Yet further it can be provided to provide a DVD in which all the of the data is only accessible in a conditional manner as herein described.

The authorised person can be provided with a remote control device which differs from that provided to unauthorised persons inasmuch that the remote control device includes at least one key which, when depressed, allows generation of a particular specific stored signal to be transmitted to the DVD apparatus. Upon receipt of the signal, the DVD apparatus identifies the particular area or areas of data on the DVD and, having identified the same, accesses the data and allows the same to be viewed via the display screen and/or listened to via the speakers. Those users without the specific key or keys or without a specific key press sequence knowledge, are unable to access that particular area of data as they are unable to generate and indeed are unaware of the specific signal which is required to be generated to access the further data areas.

Specific embodiment of the invention will now be described with reference to the accompanying drawings, wherein:-
Figure 1 illustrates a first embodiment of apparatus in accordance with the invention;
Figure 2 illustrates a second embodiment of the apparatus in accordance with the invention; and
Figure 3 illustrates a yet further embodiment of the invention.

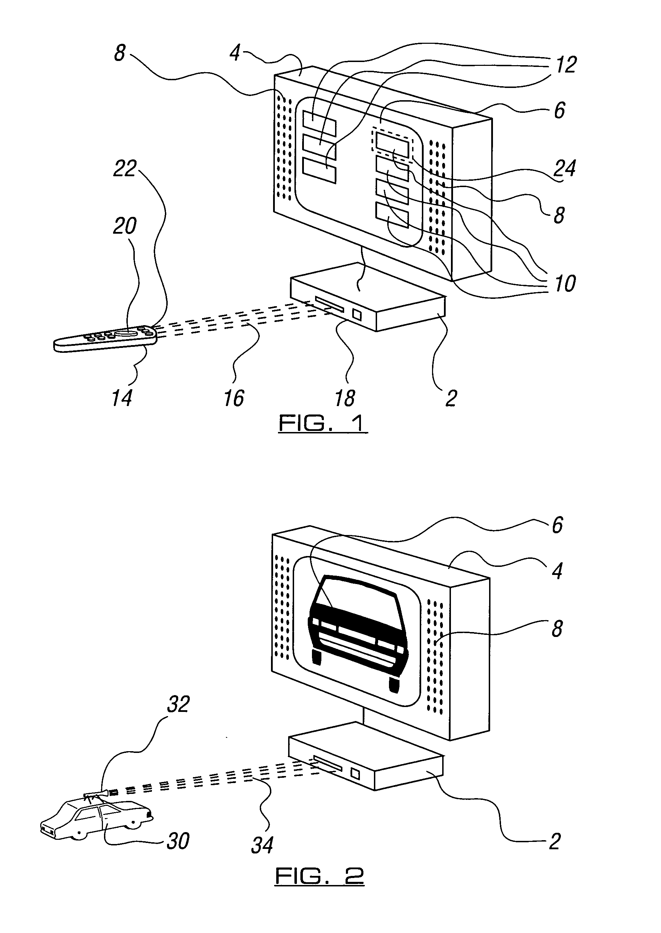

The invention of this application is envisaged to be used in relation with apparatus for the processing of data to generate video and/or audio said data provided in a storage medium such as a DVD. Such apparatus is indicated by reference numeral 2 in Figures 1 and 2. The apparatus is typically connected to allow the processing of the data and transfer of video and/or audio to a television set 4 or other display means which typically incorporate a display screen 6 and speakers 8. It will be readily appreciated that the speakers and display screen can be provided separately to one another although in connection therewith.

In normal operation, when the storage medium is inserted into the apparatus 2, the apparatus is activated and this can cause the generation of an options menu on the display screen 6 or alternatively the generation of particular video and/or audio from the data on the storage medium can commence automatically.

An example of a conventional menu display 7 is illustrated in Figure 1 and this comprises, in this case, a series of options 10, each of which relates to a particular area of data on the storage media. In this case a further series of options 12 relate to the user selection of the language in which the audio can be generated. In use, the user can utilise a remote control device 14 which generates, in this embodiment, an infrared signal 16 via a transmitter in the remote control device and which signal is received via a receiver 18 in the apparatus 2.

The remote control device is of a conventional form and in this conventional use is provided with a series of keys 20 which can be selectively depressed by the user. The depression of a particular key or a particular sequence of keys, causes a signal to be emitted and the generation of a particular action on the display screen. For example, the remote control device 14 includes a series of directional keys 22 which, when depressed, cause a highlight portion, indicated by broken lines 24 on the screen 6, to move around the screen options 10, 12 in the same direction as indicated by the directional keys 22 on the remote control device when depressed. By this means, the highlight portion 24 can be moved onto a preferred option and when the preferred option is reached, a further key, typically known as the select key, on the remote control, can be depressed and a signal generated and transmitted to the apparatus 2. This causes the data portion relating to that particular option to be selected and accessed on the storage medium and the video and/or audio resulting from that selection to be generated on the display screen and via the speakers by the apparatus accessing the appropriate data stored on the storage medium. Thus, in this case, the signal which is transmitted from the remote control device is not specific to the particular area of data but rather specifies the selection of the option which, via the display screen is displayed. This is typically by the apparatus finding the appropriate data tag on the storage medium related to the displayed option such that the particular area of data matches the selected option. When identified, the particular area of data is accessed and used to generate video and/or audio.

The functions described herein can be performed conventionally by the user in conjunction with the apparatus 2 remote control device and screen and so each user of the storage medium has equal access to the portions of data on the storage medium.

A further example of the invention is the ability to allow conditional access to a certain area or areas of data on the storage medium is to provide conditional access provided for security purposes such that for example, a storage medium includes data portions which are publicly accessible and data portions which can only be accessed by authorised personnel. The authorised personnel can be provided with an actuation device for emitting a signal of predesignated format which differs from that provided to unauthorised personnel inasmuch that the actuating device includes at least one key or switch which, when operated, allows generation of a particular predesignated specific stored signal to be transmitted to the apparatus 2. Upon receipt of the signal, the apparatus identifies the matching portion or portions of data on the storage medium and, having identified the same, accesses the data and allows the same to be used to generate video and/or audio to be viewed via the display screen and/or listened to via the speakers. Persons without the actuating means are unable to access that particular of data as they are unable to generate and indeed are unaware of the predesignated specific stored signal which is required to be generated to access the further data portion or portions.

In an alternative embodiment, as shown in Figure 1, all users may have a common remote control device 14 but each version of the product has a specific predesignated signal which when generated, perhaps by a particular key depression sequence allows the generation and transmission of a specific stored signal to the apparatus 2. Upon receipt of the same, the apparatus 2 again allows access to the particular restricted access portions of data if the predesignated signal matches the set signal for that particular product storage medium. Dependant upon the level of security required, the specified stored signal generated and transmitted can comprise a number of commands, with the number of commands used selected to provide a required security level i.e. the higher the number of commands the higher the level of security as the increased number of commands makes it more difficult for unauthorised persons to attempt to recreate the code and gain access to the data areas.

In a further feature of the invention, and regardless of the particular embodiment of the same, there may be a need to input data into the remote control device or system, from which the specific stored signal can be accessed and transmitted to the apparatus 2 via the remote control device 14 or system.

In one embodiment a series of data carrying cards with credit card type magnetic strips on the same can be provided for selective insertion into the remote control device 14 and/or connection to the remote control service. In this case the data can also be input via a card reader which reads the data from the card and sends a coded series of signals from the remote device, thus accessing a dedicated part or data area of the disc. For example, a product package can include a reader and remote device package with a storage medium containing biographies on a range of characters for the reception of separately sold collector cards each of which carries the specific signal code which is specific for the particular type of card and when a card is put in the reader it opens the character specific biography data that would otherwise be inaccessible. The input of the code can be done with magnetic strips as above, or the cards can be moulded with a set of pins that correspond with keys on the actuating means, or a bar code reader can be used. It will therefore be appreciated that the means of accessing the code is not critical, rather it is the fact that the actuating means or system can be programmed to allow the generation of specific stored signal or signals to access on a conditional basis areas of data from the recording media.

In a further embodiment of the invention, as illustrated in Figure 2, the invention can be utilised in conjunction with a toy or plaything combination. In this embodiment, security is not the concern but rather the invention is provided to allow added value to be provided to a toy or plaything and also to provide added enjoyment to the child playing with the toy and allow interaction with the said toy.

In this embodiment, when the toy or plaything is purchased, the same includes a storage medium, such as a DVD. The storage medium can be placed into the apparatus 2 and, upon placement, a menu may be generated on screen or alternatively, no further action will be immediately required. If a menu is displayed, then the user can select a particular option which will allow the generation of, for example, a scene and/or noises via a display screen and speakers. Typically the scene depicted is in some way linked and relevant to another article or articles 30 which are part of the toy or plaything and can be themed to be relevant to the content of the storage medium. Alternatively, no display is generated and the storage medium is retained in position in the apparatus 2 with the display screen and speakers switched on. In this embodiment, the article or articles 30 are provided with actuation means 32, in this example in the form of a gun on the car. When actuated, typically by mechanical action or voice activation, the actuation means cause the generation of a predesignated signal 34 from a transmitter provided in the article 30. The signal 34, when received by the apparatus 2, causes the identification of a particular portion of data on the storage medium. The accessing of the same causes the display on screen or via the speakers of video and/or audio generated from the accessed portion of data. The video and/or audio is typically linked to the operation undertaken by the child via the actuation means 32 and/or the toy article generally. In this example, the actuation means are in the form of a gun and, the activation of the actuating means is caused by the firing of the gun by the child which causes, the generation of the predesignated signal and accessing of a portion of data which causes an explosion to be generated on the display screen 6 and the sound of an explosion via the speakers 8, hence imitating the effect which may be created by the firing of the gun and providing a further aspect to the invention.

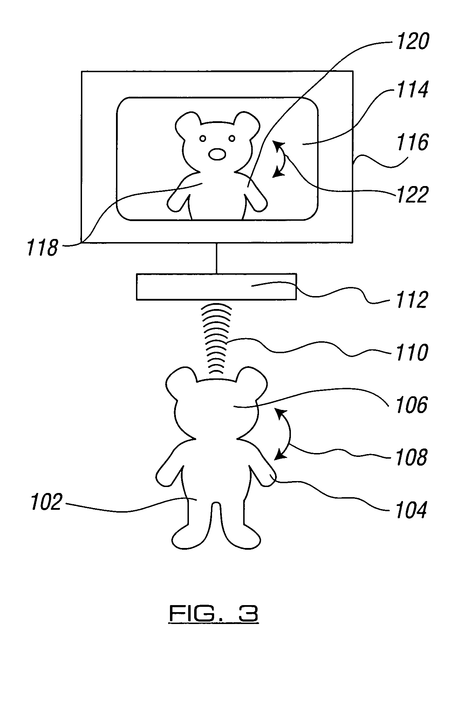

Figure 3 illustrates a further example of the invention. In this case there is provided a toy 102 in the form of a teddy bear. The bear includes an arm 104 which is movable about a pivot axis 106 as indicated by the arrow 108, typically by the child. In addition, the movement of the arm activates activation means provided in the toy 102. The activation causes the activation means to emit a signal 110 which is received by the storage medium processing means 112 in which the storage medium is placed. The signal is indicative of a particular portion of data in the storage medium. The processing means accesses the said portion of the storage medium and processes that data to generate a video display 114 on display means 116 connected to the processing means 112. The video display 114 is linked to the toy 102, in this case by showing an image of a teddy bear 118 with a waving arm 120 as illustrated by arrow 122. This therefore gives the appearance to the child playing with the toy 102 that the teddy bear 118 on the screen is waving back to the child's bear 102. Furthermore as this data to generate the video is only accessible automatically following activation of the activation means in the toy 102, the invention provides a sense of unexpected entertainment.

In addition to the advantages as described, further advantages are that the transmission of the predesignated specific stored signal can be generated via actuating means of a specific format or by a remote control device. In another case the actuating means is required to be able to transmit a signal which can be recognised by the apparatus, and in turn the storage medium, such that the storage medium itself can be configured to recognise the particular signal and, upon receiving the particular signal, allows access to a particular portion of data on the DVD. Thus, the apparatus itself does not need to be modified as the receipt of the signal accesses commands which are implanted on the storage medium itself.

## Claims

1. Apparatus for the generation of video and/or audio by the conditional access and processing of selected portions of digital data stored on a storage medium, said data stored in portions on said storage medium and said storage medium placed in processing apparatus for accessing and processing selected portions of digital data to generate video and/or audio and wherein there is provided at least one portion of data on the storage medium which is only conditionally accessible by the processing apparatus in response to a signal of a predesignated form transmitted from a transmitter provided as part of an actuating means and, said processing apparatus, upon receiving the said signal can locate the identified portion of data on the storage medium, access the same and processes the data from said portion to generate the video and/or audio.

2. Apparatus according to claim 1 wherein a further portion or portions of data on the storage medium are accessible in response to control signals emitted from a remote control device.

3. Apparatus according to claim 2 wherein the said further portions of data are accessible using the remote control device and the conditionally accessible portion of data can be accessed using actuating means other than the remote control device.

4. Apparatus according to claim 2 wherein the said further portions of data are accessible using the remote control device in conjunction with a series of options displayed on a display screen and said conditionally accessible portion of data is accessed using the signal of the predesignated format provided from the remote control device which also acts as the actuating means.

5. A system according to claim 4 wherein the conditionally accessible portion of data is not indicated on screen as being accessible until the signal of a predesignated format is generated.

6. Apparatus according to claim 1 wherein the conditionally accessible portion of data which is accessed via the transmission of the predesignated signal is associated with the means by which the signal is generated.

7. Apparatus according to claim 1 wherein operation of one or a sequence of keys or switches on the actuating device, causes the predesignated signal to be generated and transmitted to the apparatus to allow access to the conditionally accessible portion of data on the storage medium.

8. Apparatus according to claim 7 wherein the actuating means incorporates an identified key or switch which when operated causes the predesignated signal to be transmitted.

9. Apparatus according to claim 1 wherein the predesignated signal is held in a memory in the actuation means and is transmitted continuously, at intervals, or upon operation of a control means.

10. Apparatus according to claim 9 wherein the signal is transmitted when the actuating means is switched on and the transmitter of the actuation means has a given signal transmission range and when the actuating means is brought within range of the signal receiver at the processing apparatus, the conditionally accessible portion of data is accessed.

11. Apparatus according to claim 1 wherein the predesignated signal is transmitted by any of radio frequency, passive resistance, infrared, barcode or other data transfer system.

12. Apparatus according to claim 1 wherein the actuating means is only capable of transmitting the predesignated signal.

13. Apparatus according to claim 1 wherein the actuation means is a voice actuation system and the signal of a predesignated form is a word, letter(s) or numeral(s) generated by the actuation means and received by voice signal reception means provided as part of the processing apparatus.

14. Apparatus according to claim 1 wherein once the signal has been transmitted and received by the processing apparatus, the conditionally accessible portion of data on said storage medium linked to said signal is accessed and video and/or audio from said data is displayed via a display screen and/or speakers connected to the processing apparatus.

15. Apparatus according to claim 1 wherein the predesignated signal comprises a selected number of data bits, the selection determined by the security level required for the signal.

16. Apparatus according to claim 1 wherein the number of times which the conditionally accessible portion of data can be accessed is limited with respect to a predesignated value.

17. Apparatus according to claim 1 wherein the actuating means is or is provided as part of a toy, model figure or soft toy.

18. Apparatus according to claim 17 wherein the predesignated signal is emitted in response to a change in condition or position of the toy.

19. Apparatus according to claim 1 wherein the actuating means can emit a series of predesignated signals, the selection of which signal is emitted dependant on the condition of the actuating means at any given instant.

20. Apparatus according to claim 18 wherein each predesignated signal is linked to a particular conditionally accessible portion of data on the storage medium and allows access and processing of the same when that signal is received.

21. Apparatus according to claim 1 wherein the storage medium includes a plurality of conditionally accessible portions of data each of which is only accessible upon receipt of an allocated predesignated signal from the actuating means.

22. Apparatus for the generation of video and/or audio by the conditional access and processing of selected portions of digital data stored on a storage medium, said data stored in portions on said storage medium and said storage medium placed in processing apparatus for accessing and processing selected portions of digital data to generate video and/or audio and wherein the storage medium includes a first group of portions of data, said portions accessible in response to signals emitted from a user selection means and a second group including at least one portion of data which is only conditionally accessible, said conditional access achieved when the said processing apparatus receives a predesignated signal from an actuating means.

23. Apparatus according to claim 22 wherein the user selection means is a remote control device via which the user can select portions of data.

24. Apparatus according to claim 23 wherein the user selection means is used to navigate through and select options which are displayed on a display screen connected to the processing apparatus.

25. Apparatus according to claim 22 wherein the storage medium is a DVD, and the processing apparatus is a DVD player.
